**Europäisches Patentamt**

**European Patent Office**

**Office européen des brevets**

(19)

(11) Veröffentlichungsnummer: **0 010 135**
**B1**

(12) **EUROPÄISCHE PATENTSCHRIFT**

(45) Veröffentlichungstag der Patentschrift: **18.05.83**

(51) Int. Cl.³: **G 06 F 3/04**

(21) Anmeldenummer: **79103073.7**

(22) Anmeldetag: **21.08.79**

(54) Mikroprogrammgesteuerte Ein-/Ausgabeeinrichtung und Verfahren zum Durchführen von Ein-/Ausgabeoperationen.

(30) Priorität: **17.10.78 DE 2845218**

(43) Veröffentlichungstag der Anmeldung:
**30.04.80 Patentblatt 80/9**

(45) Bekanntmachung des Hinweises auf die Patenterteilung:
**18.05.83 Patentblatt 83/20**

(84) Benannte Vertragsstaaten:
**AT BE CH FR GB IT NL**

(56) Entgegenhaltungen:
**GB - A - 1 264 096**
**US - A - 3 573 852**
**US - A - 3 654 617**
**US - A - 4 056 843**

**IBM TECHNICAL DISCLOSURE BULLETIN, Vol. 17, Nr. 9, Februar 1975, New York, US, IRWIN: "Time-sliced microprogrammable I/O controller", Seiten 2539—2541**
**EUROMICRO NEWSLETTER, Vol. 2, Nr. 4, Oktober 1976, Compiègne, FR, POUJOVLAT: "The corail building block system", Seiten 29—33**

(73) Patentinhaber: **SIEMENS AKTIENGESELLSCHAFT**
**Berlin und München Wittelsbacherplatz 2**
**D-8000 München 2 (DE)**

(72) Erfinder: **Rensch, Veit, Dipl.-Ing.**
**Melchiorstrasse 14**
**D-8000 München 71 (DE)**
Erfinder: **Rubner, Wolfgang, Dipl.-Ing.**
**Altdorferstrasse 10**
**D-8000 München 21 (DE)**

(56) Entgegenhaltungen:
**EDN, Vol. 22, Nr. 18, Oktober '77, Denver, US, VILLASENOR: "Need a multiterminal interface? Try a microprocessor network", Seiten 63—68**
**4th EUROMICRO SYMPOSIUM ON MICROPROCESSING AND MICROPROGRAMMING, 17—19 Oktober 1978, München, Amsterdam, NL, Sachs: "Deployment of microprocessors in I/O handling", Seiten 198—205**

Mikroprogrammgesteuerte Ein-/Ausgabeein- richtung und Verfahren zum Durchführen von
Ein-/Ausgabeoperationen

Die Erfindung bezieht sich auf eine mikroprogrammgesteuerte Ein-/Ausgabeeinrichtung für ein datenverarbeitendes System gemäß dem Oberbegriff des Patentanspruches 1 und auf ein Verfahren zum Durchführen von Ein-/Ausgabeoperationen mit einer derartigen Einrichtung.

Das Ziel fast aller Planungen von Rechnern ist es, konkurrenzfähige Produkte mit immer höherer Betriebssicherheit bei geringeren Kosten in kürzerer Entwicklungszeit herzustellen. Ins Auge fallen dabei vor allem die beachtlichen Leistungssteigerungen in der elektronischen Datenverarbeitung, die bisher bei ständig sinkenden Preisen erzielt worden sind. Diese Fortschritte gründen sich auf mehrere Ursachen:

Dazu zählen zunächst strukturelle Maßnahmen, wie modularer Aufbau oder auch Pipeline-Strukturen. Ein anderer Aspekt ist der immer weiter fortschreitende Einsatz von programmierten Steuerungen anstelle spezialisierter Schaltungen, z.B. die Weiterentwicklung von Mikroprogrammsteuerungen. Dazu kommen die Fortschritte in der Technologie, vor allem der Halbleitertechnologie, die heute bereits zu integrierten Schaltkreisen mit einer Vielzahl von logischen Funktionen auf einem Baustein geführt haben.

Die genannten Einzelaspekte sind sicherlich nicht voneinander unabhängig zu betrachten, so sind manche strukturellen Maßnahmen erst durch Fortschritte in der Technologie sinnvoll einsetzbar. Bei Ein-/Ausgabeeinrichtungen eines datenverarbeitenden Systems haben aber gerade auch strukturelle Maßnahmen in der bisherigen Entwicklung der Datenverarbeitungstechnik eine große Leistungssteigerung bei Ein-/Ausgabetransfers bewirkt. Im Zuge dieser Entwicklung sind Ein-/Ausgabeeinrichtungen gegenüber den zentralen Verarbeitungseinrichtungen des datenverarbeitenden Systems immer selbständiger geworden. Sie haben Prozessoreigenschaft bekommen und führen von der zentralen Verarbeitungseinrichtung des datenverarbeitenden Systems nur noch zu initiierende Ein-/Ausgabetransfers selbständig durch.

Die Abläufe während einer Ein-/Ausgabeoperation sind dann in Form eines Kanalprogrammes eindeutig festgelegt, das für die Ein-/Ausgabeeinrichtung zum Zeitpunkt der Einleitung verfügbar wird. Von diesem Kanalprogramm wird ein Kanalbefehl nach dem anderen ausgeführt, wobei jeder einen Transfer von Daten oder Steuerinformationen zwischen einem Speicher des datenverarbeitenden Systems und den peripheren Geräten umfaßt.

Die Kommunikation mit einer peripheren Einheit wird üblicherweise über eine externe Standardschnittstelle durchgeführt. Die Steuerung dieser externen Schnittstelle ist eine wesentliche Funktion der Ein-/Ausgabeeinrichtung. Dabei müssen vielfach auch Realzeitbedingungen eingehalten werden, besonders dann, wenn der Datentransfer nicht von den Physikalischen Eigenschaften der peripheren Geräte, zum Beispiel durch Puffer, entkoppelt ist. Über eine interne Schnittstelle verkehrt die Ein-/Ausgabeeinrichtung mit dem Hauptspeicher des datenverarbeitenden Systems. Die Steuerung dieser internen Schnittstelle ist eine andere wesentliche Funktion der Ein-/Ausgabeeinrichtung. Weiterhin müssen während einer Datenübertragung die diesen Vorgang definierenden Parameter aufbewahrt werden. In diesem Zusammenhang ist häufig auch eine Adreßrechnung notwendig, wenn z.B. mit virtuellen Adressen gearbeitet wird. Daneben sind die Kanalbefehlsworte zu lesen, zu aktualisieren und es ist ihre Ausführung einzuleiten. Ist der laufende Kanalbefehl der letzte eines Kanalprogrammes, so muß die Ein-/Ausgabeeinrichtung den damit verbundenen Ein-/Ausgabetransfer abschließen und dem Prozess in der zentralen Verarbeitungseinrichtung, der den Ein-/Ausgabetransfer hervorgerufen hat, eine entsprechende Endemitteilung übergeben. Hier sind teilweise auch Realzeitbedingungen einzuhalten, beispielsweise muß ein nächster Kanalbefehl in der Lücke zwischen zwei Datenblöcken auf einem Plattenspeicher aktualisiert werden. Dies ist einfacher zu erreichen, wenn Kanalbefehle im voraus gelesen werden, weil dann der einem aktuellen folgende Kanalbefehl früher aktualisiert werden kann.

Die komplexesten Funktionen der Ein-/Ausgabeeinrichtung liegen aber in der Aufgabenverwaltung, die die Kommunikation mit dem veranlassenden Prozess umfaßt. Diese gegenüber anderen genannten Funktionen wesentlich rechenintensiveren Vorgänge sind allerdings in Bezug auf Realzeitbedingungen nicht kritisch. Zu diesen Funktionen gehört, daß von der zentralen Verarbeitungseinrichtung des datenverarbeitenden Systems eingeleitete Ein-/Ausgabetransfers angenommen, und, falls, erforderlich, für eine spätere Ausführung in einer Warteschlange eingereiht werden. Weiterhin müssen die jeweils betroffenen peripheren Steuerungen und Geräte ausgewählt werden, um ihnen Befehle übermitteln zu können. Am Ende einer Ein-/Ausgabeoperation muß die periphere Einheit stillgesetzt werden, eine Statusinformation aufgenommen und eine Endemitteilung an den initiierenden Prozess abgegeben werden.

Ein-/Ausgabeeinrichtungen eines datenverarbeitenden Systems haben also sehr unterschiedliche Funktionen wahrzunehmen. Manche dieser Funktionen werden sehr häufig benutzt, sind jedoch kurz in Bezug auf ihre Ausführungszeit, andere wiederum sind sehr komplex, werden allerdings auch nicht so häufig benötigt. Diese differenzierten Funktionen sind in der bisherigen Entwicklung datenverarbeitender Systeme erste allmählich mehr und mehr direkt in die Ein-/Ausgabeeinrichtungen gelegt worden, um die zentrale Verarbeitungseinrichtung nicht mehr zu belasten. Die so entstandenen Ein-/Ausgabeeinrichtungen erlaubten eine beachtliche Leistungssteigerung bei komplexen datenverarbeitenden Systemen mit einer Vielzahl von peripheren Geräten unterschiedlicher interner Verarbeitungsgeschwindigkeit bzw. Datenübertragungsrate. Diese ständig fortentwickelte Verlagerung von Steuerfunktionen in Richtung aud die Peripherie zur Entlastung zentraler Einrichtungen geht bis zum sogenannten intelligenten Endgerät, das gewisse einfache Verarbeitungsfunktionen selbst auszuführen vermag, ohne dabei zentrale Verarbeitungseinrichtungen des datenverarbeitenden Systems zu benötigen.

Vor diesem Hintergrund ist als bekannt vorauszusetzen, daß der Ein-/Ausgabeverkehr bei bekannten datenverarbeitenden Systemen mit Hilfe selbständiger Ein-/Ausgabeprozessoren durchgeführt wird, die lediglich zu Beginn eines Ein-/Ausgabetransfers zu Durchführung dieser Operation angestoßen werden. Jeder Transfer läuft über einen an den Ein-/Ausgabeprozessor angeschlossenen Kanal mit Hilfe eines Kanalprogrammes. Der einzelne Kanal umfaßt eine Kanalsteuerung, die wiederum einen der Kanalbefehle des Kanalprogrammes nach dessen Einleitung selbständig ausführen kann. An jeden Kanal ist eine Mehrzahl von peripheren Geräten angeschlossen. Enthalten diese peripheren Geräte gleichartige Gerätegruppen, so sind diesen häufig periphere Steuerungen vorgeschaltet, die gerätespezifische Steuerfunktionen wahrnehmen.

Bei den heute üblichen Datentransferraten und vielfach sehr komplexen datenverarbeitenden Systemen mit einer Vielzahl von peripheren Geräten verlangt jedoch bereits auch diese Aufteilung der Steuerungsaufgaben einen sehr leistungsfähigen Ein-/Ausgabeprozessor bzw. aufwendige Ein-/Ausgabeeinrichtungen. Man hat deshalb auch bereits versucht, Multiprozessorsysteme so aufzubauen, daß eine Mehrzahl von Prozessoren, die jedoch nicht unbedingt spezialisierte Ein-/Ausgabeprozessoren sein müssen, auch den Ein-/Ausgabeverkehr übernehmen kann. Jede Aufteilung von Datenströmen auf eine Mehrzahl von Prozessoren bedeutet jedoch immer zugleich eine Verwaltung der aktuellen Verteilung der Teiströme. Daraus folgt, daß ein solches Multiprozessorsystem als Ganzes von außen betrachtet wohl leistungsfähiger wird, die mögliche interne Verarbeitungsleistung jedoch durch derartige zusätzliche Verwaltungsaufgaben belastet wird. Neben diesem systematischen Nachteil besteht ein weiterer im beträchtlichen Schaltungsaufwand, da alle oben geschilderten Funktionen in jedem der parallel arbeitenden Ein-/Ausgabeprozessoren realisiert sein müssen.

Andererseits sind bereits Ein-/Ausgabeeinrichtungen entwickelt worden, die mehrere gleichartig aufgebaute und im wesentlichen unabhängig voneinander arbeitenden Mikroprozessoren aufweisen, die über gemeinsame Speicher (Lokalspeicher) in der Weise zusammenarbeiten, daß einer der Mikroprozessoren den Datenverkehr zwischen dem Hauptspeicher der zentralen Datenverarbeitungseinrichtung und dem Lokalspeicher und ein zweiter Mikroprozessor den Datenverkehr zwischen dem Lokalspeicher und den peripheren Geräten steuert, man siehe z.B. US—PS 40 56 843 und 36 54 617. Beide Mikroprozessoren arbeiten bezogen auf den Datenfluß zwischen dem Hauptspeicher und den peripheren Geräten also in Reihe und betreuen entweder allein die interne oder allein die externe Schnittstelle. Eine derartige Struktur gewährleistet im Vergleich zu den eigentlichen Multiprozessorsystemen die bisherige Transparenz der Schnittstellen und gleicht eher den Systemen mit Pipeline-Struktur. Ein wesentlicher Unterschied zu letzteren besteht aber darin, daß beide Mikroprozessoren untereinander in beiden Richtungen miteinander verkehren und gegenseitig Aufgaben übernehmen und damit effektiver arbeiten können.

Ausgehend von derartigen Ein-/Ausgabeeinrichtungen mit mehreren über gemeinsame Speicher zusammenarbeitende Mikroprozessoren ist es Aufgabe der Erfindung, die Leistungsfähigkeit derartiger Einrichtungen weiter zu erhöhen. Diese Aufgabe wird erfindungsgemäß durch die im Kennzeichen des Patentanspruches 1 angegebenen Merkmale gelöst.

Durch den zusätzlichen Anschluß des Mikroprozessors für die externe Schnittstelle an die Schnittstelle zum Hauptspeicher, so daß beide Prozessoren auf diesen zugreifen können, kann der Datenfluß von und zum Hauptspeicher in einen Informations- und einen Organisationsdatenstrom aufgespalten und damit der bisherige einzige Mikroprozessor für die interne Schnittstelle entlastet werden. Andererseits kann die Informationsdatenrate zwischen Hauptspeicher und Kanalsteuerung wesentlich gesteigert werden, da hierfür nur einer der Mikroprozessoren anstelle von zwei in Serie arbeitenden Mikroprozessoren zuständig ist. Auch bleibt dabei ein zusätzliches Vorauslesen von Befehlen durch den anderen Mikroprozessor ohne Auswirkung auf die Informationsdatenrate des den Datentransfer steuernden Mikroprozessors.

Durch die GB—PS 1 264 096 ist demgegenüber bereits eine Anordnung bekannt, bei der die Ein-/Ausgabeeinrichtung für einen einzigen Kanal in zwei Funktionseinheiten aufgeteilt ist, von denen die eine die Schnittstelle zwischen der Verarbeitungseinheit und dem Kanal und die andere die Schnittstelle zwischen dem Kanal und den peripheren Geräten steuert. Dazu erhält die eine Einheit anhand eines von der Verarbeitungseinheit zur Verfügung gestellten Startbefehls zur Durchführung eines Datentransfers zunächst einen Kanalbefehl aus dem Hauptspeicher, bereitet diesen auf und übergibt die gewonnenen Parameter der anderen Funktionseinheit der Ein-/Ausgabeeinrichtung zur Durchführung des entsprechenden Datentransfers zwischen Hauptspeicher und entsprechendem peripheren Gerät. Nach Ausführung des Datentransfers wird die Erledigung des Kanalbefehls an die andere Funktionseinheit zurückgemeldet und gegebenenfalls ein neuer Kanalbefehl aus dem Hauptspeicher angefordert. Von Nachteil bei dieser bekannten Anordnung ist jedoch, daß die an sich unabhängig arbeitenden beiden Funktionseinheiten der Ein-/Ausgabeeinrichtung zur Anforderung eines Kanalbefehles aus dem Hauptspeicher unmittelbar zusammenarbeiten müssen. Das würde insbesondere bei Zusammenfassung von Teilaufgaben beider Funktionseinheiten in einer übergeordneten Steuerung für mehrere Kanäle, was beim Anmeldungsgegenstand gemäß dem Oberbegriff des Patentanspruchs 1 vorausgesetzt wird, zu einer Verminderung der Leistungsfähigkeit führen, da der eine Funktionsteile für den eigentlichen Datentransfer in erhöhtem Maße immer wieder für die Bereitstellung von Kanalbefehlen für den anderen Funktionsteil benötigt würde. Auch gegenüber dieser bekannten Anordnung bringt also die beanspruchte neue Lösung erhebliche Vorteile mit sich.

Weiterbildungen der Erfindung ergeben sich aus den weiteren Patentansprüchen 2 bis 7.

Ein Ausführungsbeispiel der Erfindung wird im folgenden anhand der Zeichnung näher erläutert. Dabei zeigt:

Fig. 1 ein Blockschaltbild eines datenverarbeitenden Systems mit einer erfindungsgemäß ausgebildeten Ein-/Ausgabeeinrichtung,

Fig. 2 ein einem Blockschaltbild den Aufbau in der Ein-/Ausgabeeinrichtung,

Fig. 3 in einem Flußdiagramm die Steuerung einer Ein-/Ausgabeoperation, und

Fig. 4 in einer anderen Darstellung den zeitlichen Ablauf eines Ein-/Ausgabetransfers.

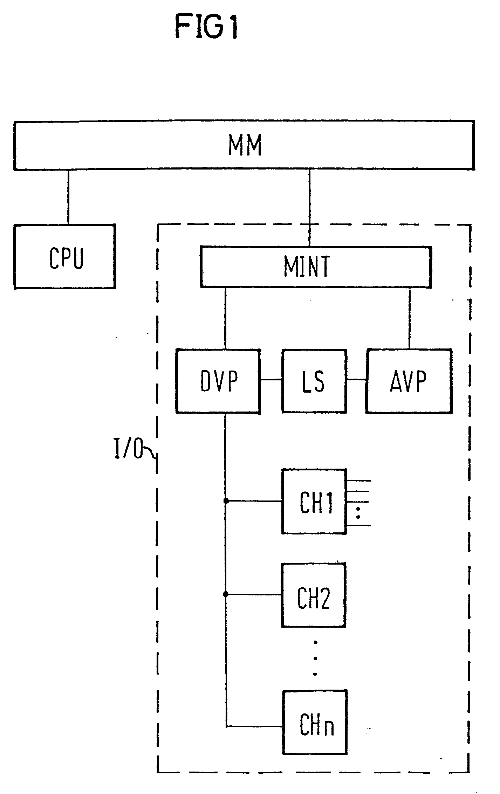

In Fig. 1 ist ein datenverarbeitendes System dargestellt, in dem eine zentrale Verarbeitungseinrichtung CPU ebenso an einen Hauptspeicher MM angeschlossen ist wie eine Ein-/Ausgabeeinrichtung I/O. Diese besitzt, angeschlossen an den Hauptspeicher MM eine Schnittstellensteuereinheit MINT zum Hauptspeicher. Diese Einheit stellt eine spezialisierte Steuereinheit für den Verkehr von zwei an sie angeschlossenen Mikroprozessoren AVP bzw. DVP mit dem Hauptspeicher MM dar. Der eine der beiden Mikroprozessoren ist dabei als Auftragsverwaltungsprozessor AVP bezeichnet. Er steuert die Kommunikation mit der zentralen Verarbeitungseinrichtung CPU und übernimmt damit alle komplexen Funktionen für die Einleitung, aber auch den Abschluß eines Ein-/Ausgabetransfers.

Der andere Mikroprozessor ist als Datenverwaltungsprozessor DVP bezeichnet, er wickelt den eigentlichen Datentransport im Verkehr mit hier nicht dargestellten peripheren Geräten ab. Dazu ist in dem Blockschaltbild von Fig. 1 nur angedeutet, daß er an eine Mehrzahl von Kanälen CH1 bis CHn angeschlossen ist, über die er dann mit einzelnen peripheren Geräten verkehrt. Die Kanäle CH1 bis CHn stellen damit die externe Schnittstelle der Ein-/Ausgabeeinrichtung I/O dar. Beide Prozessoren haben gemeinsam Zugriff zu einem Lokalspeicher LS, über den sie miteinander kommunizieren.

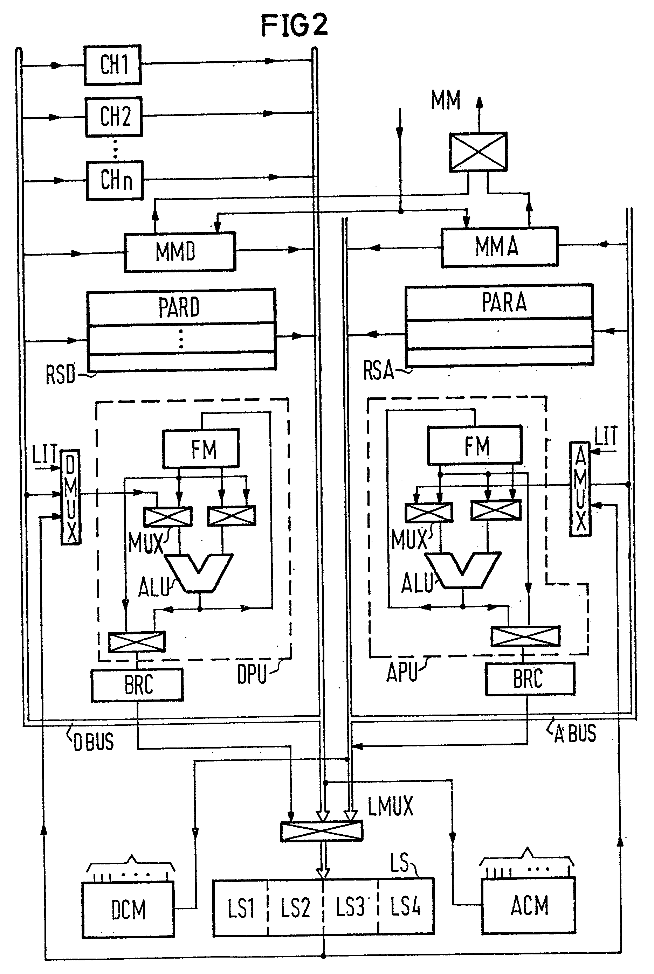

Der Aufbau der Ein-/Ausgabeeinrichtung I/O ist in Fig. 2 anhand eines Blockschaltbildes näher dargestellt. Dabei entspricht der linke Teil des Blockschaltbildes im wesentlichen dem Datenverwaltungsprozessor DVP mit den an ihn angeschlossenen Einrichtungen. Dies sind vor allem die Kanäle CH1 bis CHn, die an ein Bussystem DBUS des Datenverwaltungsprozessors DVP angeschlossen sind. An diesem Bussystem liegt auch ein schematisch angedeuteter Registersatz RSD von Arbeitsregistern des Datenverwaltungsprozessors DVP, zu dem insbesondere auch ein Parameterregister PARD zu zählen ist, dessen Funktion noch erläutert wird.

Die eigentliche Verarbeitungseinheit DPU des Datenverwaltungsprozessors DVP ist über einen Eingangsmultiplexer DMUX unter anderem auch an das Bussystem DBUS angeschlossen. Sie enthält einen Schnellspeicher FM, der über weitere Multiplexer MUX an ein Steuer- und Rechenwerk ALU angeschlossen ist. Dieses wiederum ist zur Vervollständigung einer internen Verarbeitungsschleife mit dem Schnellspeicher FM verbunden, aber auch über einen weiteren Multiplexer an einen Byterücktauscher BRC angeschlossen. In diesem Netzwerk wird die im Eingangsmultiplexer DMUX durchgeführte Verschiebeoperation wieder rückgängig gemacht. Der Ausgang dieses Netzwerkes und das Bussystem DBUS des Datenverwaltungsprozessors DVP sind über einen weiteren Multiplexer LMUX an den Lokalspeicher LS angeschlossen.

Dieser Lokalspeicher LS ist in vier Speicherbereiche LS1 bis LS4 aufgeteilt. Die beiden ersten Speicherbereiche LS1 und LS2 sind für den Auftragsverwaltungsprozessor AVP bzw. den Datenverwaltungsprozessor DVP reserviert. Der dritte Speicherbereich stellt einen allgemeinen Übergabebereich dar, zu dem beide Prozessoren Zugriff haben. Der vierte Speicherbereich ist als Übergabebereich für vorausgelesene Kanalbefehle reserviert. In Fig. 2 ist angedeutet, daß der Ausgang des Lokalspeichers LS über den Eingangsmultiplexer DMUX des Datenverwaltungsprozessors DVP wieder an die Verarbeitungseinheit DPU angeschlossen ist.

An das Bussystem DBUS des Datenverwaltungsprozessors DVP ist außerdem eine Anschlußeinheit MMD zum Hauptspeicher MM angeschlossen, über die gepufferte Daten von Hauptspeicher übernommen bzw. zum Hauptspeicher übertragen werden. Zum Datenverwaltungsprozessor DVP ist schließlich noch ein Kontrollspeicher DCM zu rechnen, der entweder als Festwertspeicher, aber auch als beschreibbarer Steuerspeicher ausgebildet sein kann und für einen nicht dargestellten Decodierteil des Datenverwaltungprozessors die Informationen zur Verfügung stellt.

Im rechten Teil von Fig. 2 sind die entsprechenden Einrichtungen des Auftragsverwaltungsprozessors AVP dargestellt. Auch dieser besitzt ein Bussystem ABUS, an das ein Registersatz RSA mit einem Parameterregister PARA und eine Anschlußeinheit MMA, sowie über einen als Bytetauscher ausgebildeten Eingangsmultiplexer AMUX die Verarbeitungseinheit APU angeschlossen ist. Diese ist analog zu der des Datenverwaltungsprozessors DVP ausgebildet und besitzt ebenso im Ausgang einen Byterücktauscher BRC, der wie das Bussystem ABUS des Auftragsverwaltungsprozessors AVP über den Eingangsmultiplexer LMUX an den Lokalspeicher LS angeschlossen ist. Auch zum Auftragsverwaltungsprozessor AVP gehört ein Kontrollspeicher ACM, der hier nun an das Bussystem DBUS des Datenverwaltungsprozessors DVP angeschlossen ist.

Aus der Darstellung in Fig. 2 geht hervor, daß die beiden Mikroprozessoren, der Auftragsverwaltungsprozessor AVP und der Datenverwaltungsprozessor DVP im wesentlichen identisch aufgebaut sind und über einen gemeinsamen Speicher, den Lokalspeicher LS, miteinander korrespondieren. Die beiden Prozessoren teilen sich in die bei einem Ein-/Ausgabetransfer auszuführenden Funktionen. Dabei übernimmt der Datenverwaltungsprozessor DVP die Steuerung über die externen Schnittstellen zu der Peripherie des datenverarbeitenden Systems, während der Auftragsverwaltungsprozessor AVP im wesentlichen die Aufgaben zur Steuerung über die interne Schnittstelle zum Hauptspeicher MM wahrnimmt.

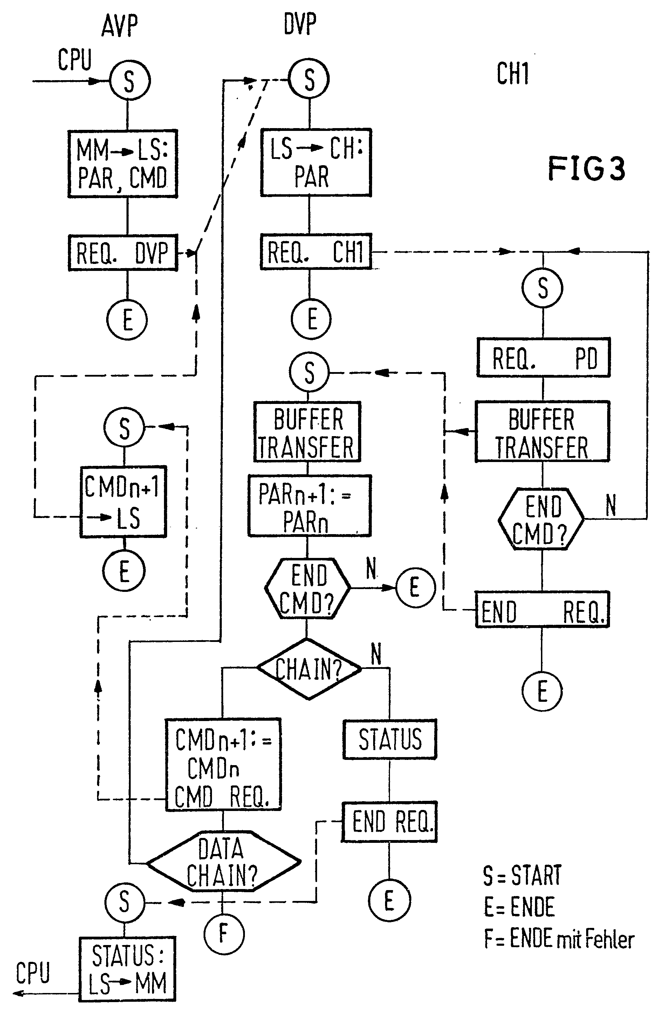

Diese Aufgabenteilung sei im folgenden anhand von Fig. 3, in der der Ablauf von Einzelfunktionen bei einem Ein-/Ausgabetransfer für beide Prozessoren AVP bzw. DVP sowie für die Kanäle CH1 bis CHn dargestellt ist. Die Darstellung in Gestalt eines Flußdiagrammes ist so gewählt, daß in der linken Spalte die vom Auftragsverwaltungsprozessor AVP, in der mittleren Spalte die vom Datenverwaltungsprozessor DVP und in der rechten Spalte die von den Kanälen CH1 bis CHn durchzuführenden Aufgaben bei einer Ein-/Ausgabeoperation dargestellt sind.

Mit einer von der zentralen Verarbeitungseinrichtung CPU abgegebenen Anforderung wird der Auftragsverwaltungsprozessor AVP aktiv. Er empfängt den Einleitungsauftrag einschließlich der Adresse des entsprechenden Kanalprogrammes und transferiert die ersten Kanalbefehle dieses Programmes in den für Kanalbefehle reservierten Speicherbereich LS4 des Lokalspeichers LS. Der Auftragsverwaltungsprozessor AVP formatiert diese entsprechend, um sie für ihre weitere Verwendung durch den Datenverwaltungsprozessor DVP vorzubereiten. Um den Transfer von Parametern von dem Auftragsverwaltungsprozessor AVP zum Datenverwaltungsprozessor DVP zu erleichtern, sind Bereich des Lokalspeichers LS, wie beschrieben, beiden gemeinsam.

Die Steuerung des Zugriffes zu dem Lokalspeicher LS für beide Prozessoren ist noch verhältnismäßig einfach. Falls beide Prozessoren gleichzeitig einen Zugriff verlangen, wird der Zugriff des Auftragsverwaltungsprozessors AVP um einen Zyklus verzögert, indem ihm hardwaremäßig eine Nulloperation aufgezwungen wird.

Der Datenverwalungsprozessor DVP, der durch den Auftragsverwaltungsprozessor AVP angestoßen wird, wählt den adressierten Kanal, z.B. CH1, aus und übergibt diesem eine Aufforderung seinerseits, die entsprechende Gerätesteuerung bzw. das periphere Gerät auszuwählen. Danach übergibt er den ersten Kanalbefehl. Handelt es sich dabei um einen Ausgabebefehl, dann fordert der ausgewählte Kanal unmittelbar Daten an, um seinen Puffer zu füllen. Danach werden die Daten an die Peripherie auf deren Anforderung hin übertragen. Sobald der Kanal freie Pufferkapazität besitzt, fordert er vom Datenverwaltungsprozessor DVP neue Daten an. Im Falle eines Lesebefehles empfängt der Kanal die Daten von der peripheren Steuerung bzw. dem peripheren Gerät. Sobald der Puffer des Kanals gefüllt ist, gibt er eine Aufforderung an den Datenverwaltungsprozessor DVP ab, um den Pufferinhalt in den Hauptspeicher MM übertragen zu lassen. Außerdem übergibt der tätige Kanal an den Datenverwaltungsprozessor DVP jedesmal dann eine Endeanforderung, wenn er eine Endebedingung feststellt.

Während der Datenübertragung werden vom Datenverwaltungsprozessor DVP die Übertragungsparameter auf den neuesten Stand gebracht, d.h., der Bytezähler erniedrigt die Adresse entsprechend erhöht bzw. übersetzt, falls bei virtueller Adressierung eine Speicherseite überschritten wird.

Ein Endetest für die laufenden Befehle eines Kanalprogrammes beendet normalerweise diese Verwaltungsfunktion. Nur wenn ein Befehlsende festgestellt wird, muß eine Kettungsbedingung abgefragt werden. Gegebenenfalls ersetzt der vorausgelesene nächste Kanalbefehl den aktuellen Befehl und der Auftragsverwaltungsprozessor AVP wird nun aufgerufen, den nächsten Kanalbefehl vorauszulesen. Dies ist eigentlich eine Organisationsfunktion einer Übertragungsprozedur. Da der Auftragsverwaltungsprozessor AVP jedoch in der Lage sein soll, Kanalbefehle zur Zeit der Befehlseinleitung zu lesen, wird ihm auch dieses Vorauslesen übertragen. Auf diese Weise wird eine bessere Belastungsverteilung zwischen beiden Prozessoren erhalten. Im Falle des Datenkettens ist jedoch die Funktion des Datenverwaltungsprozessors DVP hier beendet. Beim Befehlsketten jedoch arbeitet der Datenverwaltungsprozessor wie in der Einleitungsphase.

Ist jedoch das Ergebnis des Tests der Kettungsbedingung negative, dann hat der Datenverwaltungsprozessor DVP nur noch die Aufgabe, die Statusinformation der am Transfer beteiligten Peripherie sicherzustellen und eine Endeanforderung an den Auftragsverwaltungsprozessor AVP abzugeben. Dieser seinerseits übergibt daraufhin die Statusinformation in einen reservierten Bereich des Hauptspeichers MM und benachrichtigt die zentrale Verarbeitungseinrichtung CPU. Das Betriebssystem innerhalb der zentralen verarbeitungseinrichtung CPU setzt damit dann zen zugehörigen Prozess in den Fertigstatus.

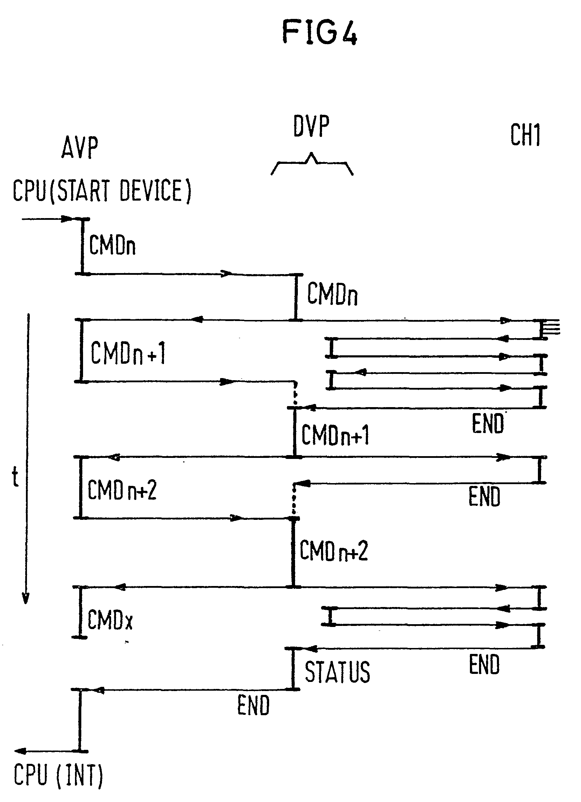

Diese Vorgänge sind in Fig. 4 nochmals in andere Form zeitlich besser aufgegliedert dargestellt. Fig. 4 zeigt dazu ein Funktionsdiagramm für die Tätigkeiten des Auftragsverwaltungsprozessors AVP im linken Teil, des Datenverwaltungsprozessors DVP im mittleren Teil und der Kanäle, z.B. CH1, als der Hardwareschnittstelle zu den Gerätesteuerungen im rechten Teil. Die Abläufe sind fortlaufend längs einer Zeitachse t von oben nach unten dargestellt. Dabei liegen simultan zueinander ablaufende Funktionen in gleicher Höhe. Der Auftragsverwaltungsprozessor AVP übernimmt von der zentralen Verarbeitungseinrichtung CPU die Anforderung auf einen E/A-Transfer in der Einleitungsphase eines Maschinenbefehles "START DEVICE". Er übergibt zur Aufbereitung der Befehlsparameter die ersten Kanalbefehle eines Kanalprogrammes an den Datenverwaltungsprozessor DVP, der wie dargestellt, den zugehörigen Kanal, z.B. CH1, auswählt. Über diesen läuft die eigentliche Datenübertragung gesteuert ab, der Datenverwaltungsprozessor DVP wird nur eingeschaltet, wenn der Kanal CH1 eine neue Datenanforderung abgibt.

Parallel dazu wird vom Auftragsverwaltungsprozessor AVP der nächste Kanalbefehl vorausgelesen, so daß dieser dem Datenverwaltungsprozessor DVP bei einer Endeanforderung des ausgewählten Kanals CH zur Verfügung steht. Dies setzt sich solange fort, bis entweder das Kanalprogramm vollständig abgearbeitet ist, oder aber, wie beim Datenketten, eine Unterbrechungsbedingung INT auftritt. Diese wird dann vom Auftragsverwaltungsprozessor AVP aufbereitet und ergibt wie bei einem normalen Ende eines Kanalprogrammes eine Rückmeldung zur zentralen Verarbeitungseinheit CPU.

Der Datenverwaltungsprozessor ist sehr leistungsfähig, wenn die Aufbereitung der Parameter und der Datentransfer zwischen der externen Schnittstelle und der internen Schnittstelle zum Hauptspeicher MM gleichzeitig durchgeführt werden kann. Dazu ist es allerdings notwendig, wie in Fig. 2 dargestellt, die entsprechenden Datenwege, insbesondere DBUS und ABUS, zu entkoppeln. Die aktualisierten Parameter werden aus den alten Werten in dem Lokalspeicher LS, aus Literalen LIT oder Registerinhalten des Registersatzes RSD errechnet. Sie werden im Lokalspeicher LS im selben Mikrobefehl wieder gespeichert. Der zweifache Zugriff zum Lokalspeicher LS verlängert zwar den Maschinenzyklus, jedoch reduziert er die Anzahl der Befehle. Kanäle mit niedriger Leistung, z.B. Byte-Multiplex-Kanäle ohne eigene Puffereinrichtungen, werden bei jedem Bytetransfer unterstützt. Dabei verwaltet der Datenverwaltungsprozessor DVP das Zwischenspeichern im Lokalspeicher LS. In diesem Fall muß das Befehlsaufbereiten und der Datentransfer nacheinander ausgeführt werden. Wegen möglicher Realzeitbedingungen ist es zwingend notwendig, daß über den Maschinenzustand bestimmte Funktion direkt beeinflußbar sind. Umgekehrt muß dieser Zustand oft sehr schnell geändert werden, dies ist dann nur durch Hardwareschaltungen möglich. Ein Beispiel für ein solches Zustandsregister, das im Registersatz RSD des Datenverwaltungsprozessors DVP enthalten ist, ist das Parameterregister PARD für die laufenden Parameter, welches ein schnelles Umschalten von einem Kontext auf den anderen erlaubt.

Dessen Bedeutung sei nachfolgend erläutert: Beide Prozessoren, der Datenverwaltungsprozessor DVP und der Auftragsverwaltungsprozessor AVP müssen zum Lokalspeicher LS mit Adressen zugreifen können, die von den Gerätenummern der an einem Transfer beteiligten Kanäle abgeleitet sind. Dazu hat jeder ein Parameterregister PARA bis PARD, das als ein Indexregister für die Adressierung des Lokalspeichers LS gilt. Auch ein weitere Teil der Register der Registersätze RSA bzw. RSD sind offene Register. Ihr Inhalt muß fortlaufend für die Hardware verfügbar sein. Wenigstens im Fall des Datenverwaltungsprozessors DVP müssen diese offenen Register auch durch die Hardware ladbar sein. Hierfür dient ein nicht dargestelltes konventionelles Prioitätsnetzwerk. Es wählt einen priorisierten Kanal aus, sofern mehrere Kanalanforderungen anstehen. Es überträgt dann die Gerätenummer des ausgewählten Kanals in dieses Parameterrigster. Zweckmäßigerweise sollte auch ein Laden dieser offenen Register des Datenverwaltungsprozessors DVP durch Hardware möglich sein. Beim Auftragsverwaltungsprozessor AVP jedoch ist eine derartige Hardwarefunktion nicht erforderlich, da er keine direkte Verbindung mit der externen Schnittstellensteuerung hat. Diese Einführung offener Register einerseits und die Tatsache, daß der Lokalspeicher LS beiden Mikroprozessoren zugänglich ist, erlaubt die Verwendung an sich verhältnismäßig langsamer handelsüblicher Mikroprozessoren trozt der vorgegebenen Realzeitbedingungen.

Der Einsatz von Mikroprozessoren in einer

**0 010 135**

Ein-/Ausgabeeinrichtung wird, wie beschrieben, in der Weise möglich, daß Funktionen, die eine komplexe Steuerung erfordern, den "intelligenteren" Mikroprozessoren zugeordnet werden und die Funktionen mit Realzeitbedingungen und weniger Steuerungsaufwand spezialisierten Hardwareeinrichtungen übertragen werden. Die unterschiedlichen Funktionseinheiten, die die besonderen Funktionen wiedergeben, arbeiten in einer unterschiedlichen Weise. Die Funktionseinheiten, die am häufigsten in einer Ein-/Ausgabeoperation benötigt werden, die Kanalsteuerungen, arbeiten in der Art einer Programmablauffolge. Alle anderen Funktionseinheiten, insbesondere der Datenverwaltungsprozessor DVP und der Auftragsverwaltungsprozessor AVP werden innerhalb einer Ein-/Ausgabeoperation seltener gebraucht und arbeiten dementsprechend als spezialisierte Steuereinheiten, die zwar miteinander kommunizieren, jedoch an sich unabhängig voneinander arbeiten.

Liste der Bezugszeichen

| | |
|---|---|
| CPU | Zentrale Verarbeitungseinrichtung |
| MM | Hauptspeicher |
| I/O | Ein-/Ausgabeeinrichtung |
| MINT | Schnittstellensteuereinheit |
| DVP | Datenverwaltungsprozessor |
| AVP | Auftragsverwaltungsprozessor |
| CH1 . . . CHn | Ein-/Ausgabekanäle |
| LS | Lokalspeicher |
| DBUS | Bussystem des Datenverwaltungsprozessors |
| RSD | Registersatz des Datenverwaltungsprozessors |
| PARD | Parameterregister des Datenverwaltungsprozessors |
| DPU | Verarbeitungseinheit des Datenverwaltungsprozessors |
| DMUX | Eingangsmultiplexer des Datenverwaltungsprozessors |
| FM | Schnellspeicher |
| MUX | Weitere Multiplexer |
| ALU | Steuer- und Rechenwerk |
| BRC | Byterücktauscher |
| LMUX | Eingangsmultiplexer des Lokalspeichers |
| LS1 | 1. Speicherbereich des Lokalspeichers für AVP |
| LS2 | 2. Speicherbereich des Lokalspeichers für DVP |
| LS3 | 3. Speicherbereich, allgemeiner Übergabebereich |
| LS4 | 4. Speicherbereich, Übergabebereich für Kanalbefehle |
| MMD | Anschlußeinheit des DVP |
| DCM | Kontrollspeicher des DVP |
| ABUS | Bussystem des Auftragsverwaltungsprozessors |
| RSA | Registersatz des Auftragsverwaltungsprozessors |
| PARA | Parameterregister des Auftragsverwaltungsprozessors |
| MMA | Anschlußeinheit des Auftragsverwaltungsprozessors zum MM |
| AMUX | Eingangsmultiplexer des Auftragsverwaltungsprozessors |
| APU | Verwaltungseinheit des Auftragsverwaltungsprozessors |
| ACM | Kontrollspeicher des Auftragsverwaltungsprozessors |
| LIT | Literal |
| INT | Unterbrechungsbedingung |

## Patentansprüche

1. Mikroprogrammgesteuerte Ein-/Ausgabeeinrichtung (I/O) mit mehreren über Lokalspeicher (LS) zusammenarbeitenden Mikroprozessoren, in der ausgelöst von einer zentralen Verarbeitungseinrichtung (CPU) eines datenverarbeitenden Systems selbständig Ein-/Ausgabetransfers über die interne Schnittstelle zum Hauptspeicher (MM) und über externe Schnittstellen zu einer Vielzahl peripherer Gerätesteuerungen, die über mit eigenen Kanalsteuerungen (CH1 bis CHn) ausgestattete Kanäle angeschlossen sind, durchgeführt werden, dadurch gekennzeichnet, daß die neben den Kanalsteuerungen (CH1 . . . CHn) für die Ausführung von Steuer- und Kontrollfunktionen vorhandenen und selbständig arbeitenden Mikroprozessoren (DVP, AVP) über eine gemeinsame Schnittstellensteuerung (MINT) während der Abwicklung der ihren zugeteilten Aufgaben unabhängig voneinander Zugriff zum Hauptspeicher (MM) haben, daß einer der Mikroprozessoren (AVP) die Funktionen der Aufgabenverwaltung, insbesondere die Einleitung und den Abschluß eines Ein/Ausgabetransfers, und mindestens ein anderer der Mikroprozessoren (DVP) die Funktionen der Datenverwaltung, insbesondere die Steuerung des eigentlichen Datenaustausches zwischen den Kanalsteuerungen (CH1 bis CHn) und dem Hauptspeicher (MM) übernimmt, daß zur Überleitung der Teilaufgaben von einem Mikroprozessor (z. B. AVP) zum anderen (z. B. DVP) und umgekehrt abhängig vom jeweiligen Fortgang des Datentransfers lediglich die dazu not-

13 **0 0 10 135** 14

wendigen Steuerdaten im für beide Mikroprozessoren (AVP, DVP) gemeinsamen Übergabebereich (LS3, LS4) des Lokalspeichers (LS) bereitgestellt werden und daß zur Sicherung der kontinuierlichen Abarbeitung von Kanalbefehlen durch den den Datentransfer ausführenden Mikroprozessor (DVP), insbesondere bei Befehlskettungen, diese vom anderen Prozessor (AVP) im Voraus gelesen und aufbereitet im Lokalspeicher (LS) bereitgestellt werden.

2. Mikroprogrammgesteuerte Ein-/Ausgabeeinrichtung nach Anspruch 1, dadurch gekennzeichnet, daß die Mikroprozessoren (DVP, AVP) ein Bussystem (DBUS bzw. ABUS) mit einem angeschlossenen internen Registersatz (RSD bzw. RSA) und eine Verarbeitungseinheit (DPU bzw. APU) mit eigenem Schnellspeicher (FM) und arithmetisch logischem Rechenwerk (ALU), die untereinander über Multiplexer verbunden sind, aufweisen.

3. Mikroprogrammgesteuerte Ein-/Ausgabeeinrichtung nach Anspruch 2, dadurch gekennzeichnet, daß zum Lösen von Speicherzugriffskonflikten bei gleichzeitigen Speicheranforderungen dieses Aufgabenverwaltungsprozessors (AVP) und des Datenverwaltungsprozessors (DVP) zum Lokalspeicher (LS) dem Aufgabenverwaltungsprozessor hardwaremäßig eine Nulloperation aufgezwungen wird, so daß sich sein Speicherzugriff um einen Zyklus verschiebt.

4. Mikroprogrammgesteuerte Ein-/Ausgabeeinrichtung nach Anspruch 2 oder 3, dadurch gekennzeichnet, daß die Mikroprozessoren (DVP, AVP) zum Adressieren des Lokalspeichers (LS) in ihren Registersätzen (RSD bzw. RSA) je ein Register (PARD bzw. PARA) für die laufenden Parameter aufweisen, die zumindestens teilweise als offene, d. h. außer über das Bussystems (DBUS bzw. ABUS) ständig an weitere Schaltungen der Prozessoren angeschlossene Register ausgebildet sind und daß mindestens das Parameterregister (PARD) des Datenverwaltungsprozessors sowohl über das Bussystem als auch unmittelbar über die Hardware ladbar ist.

5. Mikroprogrammgesteuerte Ein-/Ausgabeeinrichtung nach Anspruch 4, dadurch gekennzeichnet, daß ein Prioritätsnetzweck vorgesehen ist, das bei gleichzeitigen Anforderungen mehrerer Kanäle (CH1...CHn) an den Datenverwaltungsprozessor (DVP) den höchstpriorisierten Kanal auswählt und seine Identifikationsnummer in das Parameterregister (PARD) des Datenverwaltungsprozessors überträgt.

6. Mikroprogrammgesteuerte Ein-/Ausgabeeinrichtung nach einem der Ansprüche 4 oder 5, dadurch gekennzeichnet, daß ein Sperrnetzwerk vorgesehen ist, das die Übergabe einer kanalinternen Anforderung an den Datenverwaltungsprozessor (DVP) so lange unterdrückt, bis eine vom Datenverwaltungsprozessor an den Aufgabenverwaltungsprozessor (AVP) abgegebene Anforderung auf Lesen eines Kanalbefehles im voraus durch den Aufgabenverwaltungsprozessor abgeschlossen ist.

7. Verfahren zum Durchführen von Ein-/Ausgabeoperationen mit einer mikroprogrammgesteuerten Ein-/Ausgabeeinrichtung nach einem der Ansprüche 1 bis 6, dadurch gekennzeichnet, daß

— die zentrale Verarbeitungseinrichtung (CPU) zum Einleiten einer Ein-/Ausgabe-Operation an den Aufgabenverwaltungsprozessor (AVP) eine Anforderung mit einem Befehl "START DEVICE" mit der Adresse eines im Hauptspeicher (MM) gespeicherten Kanalprogrammes übergibt,

— der Auftragsverwaltungsprozessor daraufhin aus dem Hauptspeicher Parameter und die ersten Kanalbefehle des Kanalprogramms entsprechend formatiert in den Lokalspeicher (LS) überträgt und anschließend den Datenverwaltungsprozessor (DVP) aktiviert),

— der Datenverwaltungsprozessor den betroffenen Kanal (CH1...CHn) auswählt, diesen zur Adressierung des betroffenen peripheren Geräts auffordert und ihm den ersten Kanalbefehl übergibt,

— die Steuereinheit des ausgewählten Kanals bei einem Ausgabebefehl unmittelbar den Datenverwaltungsprozessor auffordert. Daten in einen Kanalpuffer zu übertragen, bei einem Eingabebefehl jedoch erst, wenn der Kanalpuffer durch das periphere Gerät gefüllt ist, den Datenverwaltungsprozessor auffordert, die gepufferten Daten in den Hauptspeicher zu übertragen,

— der Datenverwaltungsprozessor in dieser Zeit die Parameter aktualisiert, d. h. fortlaufend den Bytezähler erniedrigt, die Adresse erhöht und auch übersetzt, falls eine Speicherseite überschritten wird,

— der Datenverwaltungsprozessor nach den Ausführen eines Kanalbefehls feststellt, ob eine Befehlskettung vorliegt und gegebenenfalls den nächsten Kanalbefehl aus dem Lokalspeicher liest und aufbereitet,

— der Auftragsverwaltungsprozessor zugleich aufgefordert wird, einen weiteren Kanalbefehl des Kanalprogramms aus dem Hauptspeicher in den Lokalspeicher im voraus zu übertragen,

— der Datenverwaltungsprozessor am Ende eines Kanalprogrammes die Statusinformation des am Transfer beteiligten peripheren Geräts im Lokalspeicher speichert und dem Auftragsverwaltungsprozessor eine Endeanforderung übergibt,

— und der Auftragsverwaltungsprozessor daraufhin die Statusinformation in den Hauptspeicher, sowie der zentralen Verarbeitungseinheit die Endemitteilung überträgt.

Claims

1. Micro-programme controlled input/output device (I/O) comprising a plurality of microprocessors which cooperate via local stores (LS) and in which, triggered by a central processing device (CPU) of a data processing system, input/output transfers are automatically executed via the internal interface to the main store (MM) and via external interfaces to a plurality of peripheral device control units which are connected via channels equipped with their own channel control units (CH1 to CHn), characterized in that the microprocessors (DVP, AVP) which are provided in addition to the channel control units (CH1 ... CHn) for the implementation of control and monitoring functions and which operate automatically have access to the main store (MM) independently of one another via a common interface control unit (MINT) during the running of the functions which they are assigned, that one of the microprocessors (AVF) undertakes the role of function administration, in particular the initiation and conclusion of an input/output transfer, and at least one other of the microprocessors (DVP) undertakes the role of data administration, in particular the control of the actual data exchange between the channel control units (CH1 to CHn) and the main store (MM), that in order that the sub-functions may be passed from one microprocessor (e.g. AVP) to the other (e.g. DVP) and *vice versa*, in dependence upon the particular progress of the data transfer, only the items of control data required for the purpose are made available in the transfer zone (LS3, LS4) of the local store (LS) which is common to the two microprocessors (AVP, DVP), and that in order to safeguard the continuous processing of channel commands by the microprocessor (DVP) which executes the data transfer, in particular in the case of command chains, these are made available in the local store (LS) having been previously read out and prepared by the other processor (AVP).

2. Micro-programme controlled input/output device as claimed in claim 1, characterized in that the microprocessors (DVP, AVP) comprise a bus system (DBUS, ABUS) having a connected internal register set (RSD, RSA) and a processing unit (DPU, APU) having its own high speed store (FM) and an arithmetical logic calculating unit (ALU) which are connected to one another via multiplexers.

3. Micro-programme controlled input/output device as claimed in claim 2 characterized in that in order to solve store access conflicts in the event of simultaneous store requests to the local store (LS) on the part of this function administration processor (AVP) and the data administration processor (DVP), the function administration processor is compelled in terms of hardware to carry out a null operation so that its store access is displaced by one cycle.

4. Micro-programme controlled input/output device as claimed in claim 2 or 3, characterized in that for the addressing of the local store (LS), in their register sets (RSD, RSA) the microprocessors (DVP, AVP) each contain a register (PARD, PARA) for the continuous parameters, which registers consist at least in part of open registers which are not only connected via the bus system (DBUS, ABUS) but are also connected to further circuits of the processors, and that at least the parameter register (PARD) of the data administration processor can be loaded both via the bus system and also directly via the hardware.

5. Micro-programme controlled input/output device as claimed in claim 4, characterized in that a priority network is provided which in the event that requests are made simultaneously from a plurality of channels (CH1, CHn) to the data administration processor (DVP) selects the channel which has the highest priority and transfers its identification number to the parameter register (PARD) of the data administration processor.

6. Micro-programme controlled input/output device as claimed in one of the claims 4 or 5, characterised in that a blocking network is provided which suppresses the transfer of a channel-internal request to the data administration processor (DVP) until a request for the read-out of a channel command, emitted by the data administration processor to the function administration processor (AVP), has been previously concluded by the function administration processor.

7. Processor for the implementation of input/output operations comprising a micro-programme controlled input/output device as claimed in one of the claims 1 to 6, characterised in that

— in order to initiate an input/output operation the central processing device (CPU) supplies the function administration processor (AVP) with a request comprising a "START DEVICE" command together with the address of a channel programme stored in the main store (MM),

— from the main store the function administration processor subsequently transfers parameters and the first channel commands of the channel programme in the appropriate format into the local store (LS) and subsequently activates the data administration processor (DVP),

— the data administration processor selects the relevant channel (CH1 to CHn), requests the latter to address the relevant peripheral device and supplies it with the first channel command,

— in the event of an output command the control unit of the selected channel immediately requests the data administration processor to transfer data into a channel buffer, but in the event of an input command does not request the data administration

17 **0010135** 18

processor to transfer the buffered data into the main store until the channel buffer has been filled by the peripheral device,

— during this time the data administration processor brings up to date the parameters, i.e. continuously counts down the byte counter, increases the address and also translates the address if a store page is overshot,

— following the execution of a channel command the data administration processor establishes whether this is a question of a command chain and if necessary reads out and prepares the next channel command from the local store,

— at the same time the function administration processor is requested to effect a preliminary transfer of a further channel command of the channel programme from the main store into the local store,

— at the end of a channel programme the data administration processor stores the status information relating to the peripheral device participating in the transfer in the local store, and supplies the function administration processor with an end request,

— and the function administration processor subsequently transfers the status information to the main store and the end communication to the central processing unit.

**Revendications**

1. Dispositif entrée/sortie (I/O) à commande microprogrammée, du type à plusieurs microprocesseurs coopérant par l'intermédiaire de mémoires locales (LS), dans lequel sont réalisés, par déclenchement à partir d'une installation centrale de traitement (CPU) d'un système pour le traitement des données, automatiquement des transferts entrée/sortie, par l'intermédiaire de l'interface intérieur, vers la mémoire principale (MM) et, par l'intermédiaire d'interfaces extérieurs, vers des commandes périphériques d'appareils, qui sont reliées à des canaux qui sont pourvus de commandes de canaux propres (CH1 à CHn), caractérisé par le fait que les microprocesseurs (DVP, AVP) prévus pour l'exécution de fonctions de commande et de contrôle et opérant de façon autonome, ont, par l'intermédiaire d'une commande commune (MINT) d'interface, pendant le déroulement des tâches qui leur sont assignées et indépendamment l'un de l'autre, accès la mémoire principale (MM), que l'des microprocesseurs (AVP) prend en charge les fonctions de la gestion des problèmes, plus particulièrement l'initialisation et la terminaison d'un transfert entrée/sortie et qu'au moins un autre des microprocesseurs (DVP) prend en charge les fonctions de la gestion des données, en particulier la commande de l'échange proprement dit des données entre les commandes des canaux CH1 à CHn) et la mémoire principale (MM), que pour la transmission de opérations partielles d'un microprocesseurs (AVP) à l'autre (par exemple DVP), et inversement, et en fonction du développement du transfert de données, sont seules préparées, dans la partie commune de transmission (LS3, LS4) de la mémoire locale (LS), les données de commande nécessaires à cet effet, et pour assurer le traitement continu d'instructions de canaux par le microprocesseur (DVP) qui exécute le transfert de donées, en particulier dans le cas d'enchaînements d'instructions, ceux-ci sont lus à l'avance par l'autre processeur (AVP) et sont mis à disposition dans la mémoire locale (LS), après traitement.

2. Dispositif entrée/sortie à commande microprogrammée selon la revendication 1, caractérisé par le fait que les microprocesseurs (DVP, AVP) comportent un système de bus (DBUS et ABUS) avec un jeu de registres internes branché (RSD et RSA) et une unité de traitement (DPU et APU) à mémoire rapide propre (FM) et à unité de calcul logique arythmétique, qui sont reliés entre eux par l'intermédiaire d'un multiplexeur.

3. Dispositif entrée/sortie à commande microprogrammée selon la revendication 2, caractérisé par le fait que pour résoudre des conflits d'accès à la mémoire, avec demande simultanée de mémoire de ce processeur de gestion de problèmes (AVP) et du processeur de gestion de données (DVP), à la mémoire locale (LS) on impose au processeur de gestion de travaux, du point de vue du matériel de traitement de l'information, une opération nulle, en sorte que son accès à la mémoire se décale d'un cycle.

4. Dispositif entrée/sortie à commande microprogrammée selon la revendication 2 ou 3, caractérisé par le fait que les microprocesseurs (DVP, AVP) comportent, pour l'adressage de la mémoire locale (LS), dans leurs jeux de registres (RSD et RSA), respectivement un registre (PARD et PARA) pour les paramètres courants, réalisés, au moins partiellement, sous la forme de registres ouverts, c'est-à-dire de registres qui sont reliés en permanence à d'autres circuits des processeurs, sans passer par le système de bus (DBUS et ABUS), et qu'au moins le registre des paramètres (PARD) du processeur de gestion de données est susceptible d'être chargé aussi bien par l'intermédiaire du système de bus que directement aussi par l'intermédiaire du matériel de traitement de l'information.

5. Dispositif entrée/sortie à commande microprogrammée selon la revendication 4, caractérisé par le fait qu'il est prévu un réseau prioritaire qui, lors de la demande simultanée de plusieurs canaux (CH1 ... CHn), sélectionne au niveau du processeur de gestion de données (DVP) le canal de priorité la plus élevée et transmet son numéro d'identification dans le registre des paramètres (PARD) du processeur de gestion des données.

6. Dispositif entrée/sortie selon l'une des

**0010135**

revendications 4 ou 5, caractérisé par le fait qu'il est prévu un réseau de blocage qui supprime la transmission d'une demande, interne au canal, au processeur de gestion de données (DVP) jusqu'à ce qu'une lecture d'une instruction de canal, demandée par le processeur de gestion de données au processeur de gestion des travaux (AVP), soit préalablement terminée par le processeur de gestion des travaux données au processeur de gestion de problèmes (AVP).

7. Procédé pour la mise en oeuvre d'opérations entrée/sortie avec un dispositif entrée/sortie à commande microprogrammée, selon l'une des revendications 1 à 6, caractérisé par le fait que

— l'unité de traitement centrale (CPU) transmet, pour introduire une opération entrée/sortie, au processeur de gestion de problèmes (AVP) une demande avec une instruction "START DEVICE" avec l'adresse d'un programme de canal mémorisée dans la mémoire principale (MM),
— le processeur de gestion des travaux transmet alors de la mémoire principale des paramètres et les premières instructions de canaux du programme de canaux, formatées de façon correspondante, dans la mémoire locale (LS) et active ensuite le processeur de gestion de données (DVP),
— le processeur de gestion des données sélectionne le canal concerné (CH1 ... CHn), sollicite celui-ci pour l'adressage de l'appareil périphérique concerné et lui transmet la première instruction de canal,
— l'unité de commande du canal sélectionné demande, dans le cas d'une instruction de sortie, directement au processeur de gestion de données, de transmettre les données dans une mémoire tampon de canal, mais, dans le cas d'une intruction, elle demande au processeur de gestion de données de transmettre les mémoires mémorisées temporairement dans la mémoire principale, seulement lorsque la mémoire tampon de canal a été remplie par l'appareil périphérique,
— le processeur de gestion des données actualise, pendant ce temps, les paramètres, c'est-à-dire réduit de façon continue le contenu du compteur des octets, augmente l'adresse et la traduit si une page de mémoire a été dépassée,
— le processeur de gestion des données détermine, après l'exécution d'une instruction de canal, si une chaîne d'instructions est présente, et procède éventuellement à la lecture et au traitement de l'instruction suivante du canal dans la mémoire locale,
— le processeur de gestion des travaux est sollicité de transmettre à l'avance une autre instruction de canal du programme de canaux, de la mémoire principale dans la mémoire locale,
— la processeur de gestion des données mémorise, à la fin d'un programme de canaux, l'information de l'état de l'appareil périphérique qui participe au transfert, et transmet une demande de terminaison au processeur de gestion de travaux,
— et le processeur de gestion des travaux transmet ensuite l'information de l'état dans la mémoire principale et l'information de terminaison à l'unité centrale de traitement.

FIG 1

# FIG 2

**0010135**

AVP          DVP                    CH1

CPU  (S)        (S)

FIG 3

```
MM→LS:       LS→CH:
PAR, CMD      PAR
```

```
REQ. DVP      REQ. CH1  ------------→
```

(E)          (E)                    (S)

(S)                              REQ.  PD

```
CMDn+1        BUFFER          BUFFER
→ LS          TRANSFER        TRANSFER
```

(E)          ```
             PARn+1: =        END
             PARn             CMD?  N
```

```
END                END   REQ.
CMD?  N → (E)
```
                                   (E)

CHAIN?  N

```
CMDn+1: =      STATUS
CMDn
CMD  REQ.
```
               END REQ.

DATA                        (E)
CHAIN?

(S)                         S = START
(F)                         E = ENDE
                            F = ENDE mit Fehler

```
STATUS:
CPU  LS→MM
```

3

# FIG 4